# EUROPEAN PATENT APPLICATION

(11) **EP 1 722 154 A2**
(43) Date of publication of application: **15.11.2006**
(21) Application number: 05717181.1
(22) Date of filing: 02.03.2005
(51) Int. Cl.: F17C 13/04, F16K 15/04

(54) **PLUG VALVE FOR LIQUEFIED GAS CONTAINERS**

(30) Priority: 05.03.2004 MA 26324
(71) Applicant: Plaxats Oller, Salvador, 29780 Nerja, Malaga (ES)
(72) Inventor: Plaxats Oller, Salvador, 29780 Nerja, Malaga (ES)
(74) Representative: Curell Aguilà, Marcelino
(86) International application number: PCT/ES2005/000097
(87) International publication number: WO 2005/084106

(57) **Abstract**

This check valve for liquefied gas containers, concretely those installed in the mouth of the liquefied gas containers in their industrial and domestic use, which closes automatically and is opened by a push device included in a regulating valve that, in cooperation with a pressure reducer, regulates the flow-rate of the gas in its supply to a consumer appliance, the ball (23) of the ball shut-off member (3) being provided with a slide appendix (24) which is perpendicular to the shut-off plane and is provided with a right section preventing its rotation and which slidingly coincides with a guide window (25) formed in the bottom wall (22) of a spring body (6) of the support casing (2).

## Description

The present invention relates to a check valve for liquefied gas containers, which is one of the type of those installed in the mouth of liquefied gas containers for industrial and domestic use, particularly on camp sites.

These check valves are formed by a support casing, also called a shut-off or spring casing, which is attached by welding and, more frequently, by screwing to the mouth of the liquefied gas container, which support casing includes a ball shut-off member that, urged by a spring, hermetically engages a shut-off seat provided in the same casing.

This type of check valve causes certain problems, when used in an unprotected environment, due to dirt deposited on the mouth or in microcavities formed by oxidation or chemical attack of atmospheric agents acting on the visible part of the shut-off member ball.

When refilling the container with liquefied gas, the ball rotates randomly and may locate itself in a position in which part of its surface affected by the dirt or the oxidation engages the gasket of the seat, giving rise to defective sealing points that cause leaks which are impossible to repair, which requires emptying the container and replacing the leaking check valve, which represents a considerable economic cost.

With a view to obviating said problem, the solution has been adopted of having the shut-off member ball engage the shut-off seat always with one same spherical portion, for which purpose means are contemplated that allow the ball to be moved without it rotating in any way.

In accordance with the aforesaid solution, the check valve according to the invention has been developed. It is characterized essentially in that the ball shut-off member is provided with a slide appendix which is perpendicular to the shut-off plane and is provided with a right section preventing it from rotating and which slidingly coincides with a guide window formed in the bottom of the support casing.

One optional feature of the invention, which allows for the use of a cleaning tool for the portion of the shut-off member ball normally engaging the shut-off seat, consists of the support casing being provided, at its threaded mouth for the insertion of the regulating valve or handwheel valve, above the shut-off seat for the ball shut-off member, with a resilient frustoconical sheet-like gasket allowing access to the ball shut-off member.

A further feature of the invention, related to the possibility of cleaning said seat portion, consists of the arrangement of a cleaning tool by which the ball shut-off member is accessible, through the resilient frustoconical sheet-like gasket, by an elastically resilient mouth of a cleaning tool which adapts itself to a spherical portion of the surface of the shut-off member ball corresponding to that portion with which said ball engages the shut-off seat, all because of the thrust exerted on the ball shut-off member by a pushing device that, by overcoming the action of the spring, separates the ball from its seat, seals the space by engaging with the resilient frustoconical sheet-like gasket and causes a rotation of said elastically resilient mouth with which it wipes the ball of the shut-off member.

Finally, a further feature of the invention lies in the fact that the elastically resilient mouth of the cleaning tool forms a tubular end portion of a resilient body axially crossed by a push rod that, at one end, terminates in a centered push tip for the ball shut-off member and, at the other end, is urged by a spring engaging a regulating nut screwed thereon, said rod extending through a guide body fixed to a casing in which a spring urges a flange of a moving conduit in which said guide body and said resilient body slide, and with which the resilient frustoconical sheet-like gasket is closed.

To facilitate the understanding of the foregoing ideas, there is described hereinafter a preferred embodiment of the invention, with reference to the accompanying illustrative drawings, in which:
Figure 1 is a side elevation view of a check valve comprising the object of the invention,
Figure 2 is a cross section view on the line II-II of Figure 1.
Figure 3 is a cross section view on the line III-III of Figure 2.
Figure 4 is a view, partly in section, on a diametric plane of a cleaning tool appropriate for the check valve of the invention.
Figure 5 shows the cleaning tool of Figure 4 in a working position in a check valve such as that of Figure 1.

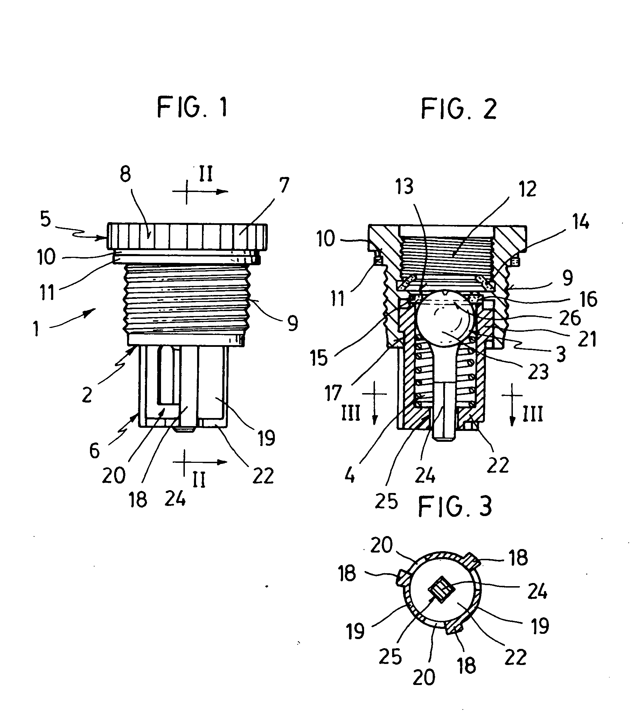

Figure 1 shows a check valve 1 which is formed substantially by a support casing 2, a ball shut-off member 3 and a spring 4.

The support casing 2, in the case illustrated as example of the invention in the drawings, is formed, as shown in Figures 1 through 3, by an attachment body 5 associated with a spring body 6.

Said attachment body 5 consists of a sort of bushing having a handling flange 7, that allows the check valve 1 to be mounted in and dismantled from the threaded mouth of a liquefied gas container because of its periphery having facets 8, castellations or other arrangements allowing a handling tool to be used, such as a fixed spanner, an adjustable spanner, etc.; of a threaded outer portion 9, for insertion in the said threaded mouth, of an external step 10, for seating a sealing gasket 11, of an internal threaded portion 12, for the insertion of a handwheel valve; of a first internal shoulder 13 for seating a resilient frustoconical sheet-like gasket 14, of a second internal shoulder 15, below the first mentioned shoulder, for seating a seating gasket 16 for the ball shut-off member 3, and of an interrupted shoulder 17 for housing and fixing the spring body 6 by way of a bayonet arrangement.

This spring body 6 is provided with axial ribs 18 bordered by walls 19 and windows 20, at the same time as said ribs 18 and walls 19 are connected at a top end thereof in an interrupted ring 21, which engages the interrupted shoulder 17 to form a bayonet type engagement arrangement and, at a bottom end thereof, in a bottom wall 22.

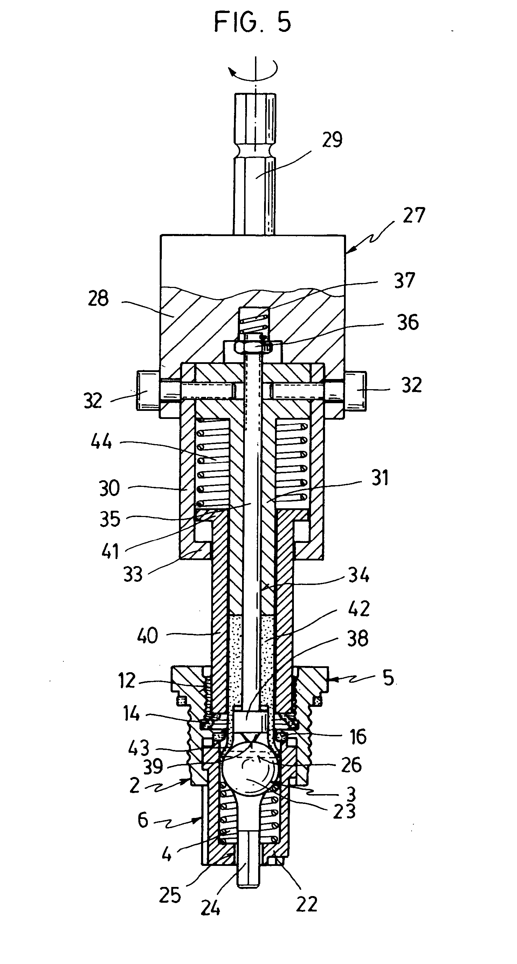

The ball shut-off member 3 comprises a ball 23, as such, that is provided with the peculiarity, the object of the invention, that it includes a slide appendix 24 capable of sliding in a guide window 25 provided in the bottom wall 22 of the spring body 6, which slide appendix 24 has, in turn, the peculiarity that its right section is such that axial rotation is inhibited, which is aided by the fact that said guide window 25 duly mates therewith to allow the axial sliding of the slide appendix 24, as may be seen in Figure 5, and prevent its rotation.

It is thus obvious that the ball 23 of the ball shut-off member 3 always engages the seating gasket 16 with one same spherical portion 26, which will always be hidden protected from the dirt, oxidation and the attack of atmospheric agents, so that each time the check valve 1 closes after being opened, the ball 23 will be positioned on the seating gasket 16 with the original spherical portion 26, whereby the liquefied gas containers provided with this check valve 1 may have a long life without the need for the repairs to which they have to be subjected at each refilling of the containers having the conventional check valves having the free ball shut-off member.

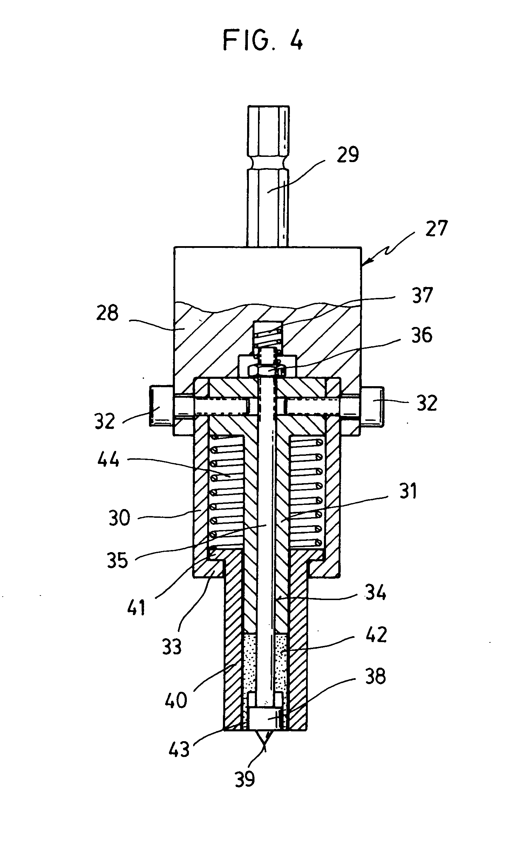

In the liquefied gas containers having the check valves 1 of the invention, the balls 23 of their shut-off members may be cleaned with a cleaning tool 27, as shown in Figures 4 and 5.

The said cleaning tool 27 is shown in the rest position in Figure 4 and in a state of use in Figure 5.

Said cleaning tool 27 comprises a head 28, having a rod 29 for attachment to a not shown support member, housing a fixed assembly formed by a jacket 30 and a guide body 31, both held simultaneously by respective oppositely facing screws which cross them together with the head 28. The jacket 30 has a internal flange 33 and the guide body 31 has an axial conduit 34 in which there is housed a push rod 35 which, at one end includes a nut 36 and a spring 37 and, at the other end, is provided with a retaining head 38 and a push tip 39.

A moving tubular member 40, which is provided with a flange 41 for seating on the internal flange 32 of the jacket 30, houses therein the guide body 31 and a resilient body 42 forming an elastically resilient mouth 43, said moving tubular member 40 being urged by a spring 44.

As shown in Figure 5, the cleaning tool 27 is inserted in the mouth of the attachment body 5 and engages the resilient frustoconical sheet-like gasket 14 with the end of the guide body 31, to seal the space at the same time as the push rod 35 displaces the ball 23 from its seat against the seating gasket 16 by overcoming the force of the spring 4 and adapts itself with the elastically resilient mouth 42 over the surface of the spherical portion 26 of the ball 23, at which time the cleaning tool 27 is rotated a few times, whereby any impurity on the said spherical portion is wiped away, after which, when the cleaning tool 27 is withdrawn, the ball 23 reseats itself on the seating gasket 16 with its original spherical portion 25, preventing the intromission of any foreign body between the ball 23 and its seating gasket 16 to cause a gas leak.

## Claims

1. A check valve for liquefied gas containers, concretely those installed in the mouth of the liquefied gas containers in their industrial and domestic use, which closes automatically and is opened by a push device included in a regulating valve that, in cooperation with a pressure reducer, regulates the flow-rate of the gas in its supply to a consumer appliance and which, being of the type of those formed by a support casing attachable by screwing to the mouth of the container, includes a ball shut-off member which, urged by a spring, engages a shut-off seat, **characterized in that** the ball (23) of the ball shut-off member (3) is provided with a slide appendix (24) which is perpendicular to the shut-off plane and is provided with a right section preventing its rotation and which slidingly coincides with a guide window (25) formed in the bottom wall (22) of a spring body (6) of the support casing (2).

2. The check valve for liquefied gas containers according to claim 1, **characterized in that** the support casing (2), in the threaded mouth (12) thereof for the insertion of the regulating valve and above the shut-off seat for the ball shut-off member, is provided with a resilient frustoconical sheet-like gasket (14).

3. The check valve for liquefied gas containers, according to any one of the foregoing claims, **characterized in that** the ball shut-off member (3) is accessible, through the resilient frustoconical sheet-like gasket (14), by an elastically flexible mouth (43) of a cleaning tool (27) for the ball shut-off member (3), which mouth (43) is adapted to the spherical portion (26) of the surface of the ball (23) with which it engages the seating gasket (16), all because of the thrust exerted on the ball shut-off member (3) by a push device (35) which separates it from its seat (16), seals the space by cooperating with the resilient frustoconical sheet-like gasket (14) and rotates said elastically resilient mouth (43).

4. The check valve for liquefied gas containers according to claim 3, **characterized in that** the elastically resilient mouth (43) of the cleaning tool (27) forms a tubular end portion of a resilient body (42) axially crossed by a push rod (35) that, at an outer end, terminates in a centered push tip (39) for the ball shut-off member (3) and, at the other inner end, is urged by a spring (37) that engages a regulating nut (36) screwed thereon, said rod extending through a guide body (31) attached to a casing (30) in which a spring (44) urges a flange (41) of a moving tubular member (40) in which said guide body (31) and resilient body (42) slide and with which the resilient frustoconical sheet-like gasket (14) is closed.
